# EUROPÄISCHE PATENTSCHRIFT

(11) **EP 0 401 876 B1**
(45) Veröffentlichungstag und Bekanntmachung des Hinweises auf die Patenterteilung: **18.11.1993**
(21) Anmeldenummer: 90114539.1
(22) Anmeldetag: 13.01.1989
(51) Int. Cl.: F16K 47/00, F16K 31/40

(54) **Hydraulisch gesteuertes Ventil**
Hydraulically actuated valve
Clapet à commande hydraulique

(30) Priorität: 19.01.1988 US 145345
(43) Veröffentlichungstag der Anmeldung: 12.12.1990
(62) Teilanmeldung aus: 89100510.0
(73) Patentinhaber: DEERE & COMPANY, Moline, Illinois 61265 (US)
(72) Erfinder: Kramer, Kenneth Dee, Waterloo, Iowa 50701 (US); Sparks, Gregory Evan, Waterloo, Iowa 50701 (US)
(74) Vertreter: Feldmann, Bernhard

(56) Entgegenhaltungen:
- US-A- 2 329 001
- US-A- 4 526 340
- US-A- 4 650 155

## Beschreibung

Die Erfindung betrifft ein hydraulisch gesteuertes Ventil mit einem Hauptventilteil, welches in einem Gehäuse verschiebbar angeordnet ist und mit diesem eine Pilotkammer umgrenzt, wobei der Druck in der Pilotkammer direkt auf das Hauptventilteil einwirkt, um die Flüssigkeitsverbindung zwischen Einlaß und Auslaß des Ventils zu steuern. Das Ventil enthält ferner Pilotventilmittel zur Steuerung des Pilotdruckes, welche wenigstens ein in bezug zum Hauptventilteil bewegbares Pilotventilteil enthalten.

Ein derartiges Ventil wurde in der US-A-4 526 340 beschrieben. Das Hauptventilteil und das Pilotventilteil sind durch Federmittel miteinander gekoppelt, wodurch die infolge des Flüssigkeitsdruckes erzeugte Pilotkraft durch mechanische Federkraft vergrößert wird.

Normalerweise erfordert ein hydraulisch betätigtes (zweistufiges) Ventil einen durch die Flüssigkeitsströmung veranlaßten Druckabfall über der Pilotstufe und folglich auch über Ventileinlaß und Ventilauslaß, durch die die Dichtungsgleitwiderstände und die Federvorspannung der Hauptventilstufe überwunden werden können und die Hauptventilstufe veranlaßt wird, den Hauptventilsitz zu öffnen. Eine Anwendung solcher Ventile findet sich bei Steuerventilen, welche das Anheben und Absenken der Anbauvorrichtung eines landwirtschaftlichen Schleppers durch einen Hydraulikzylinder mit großer Grundfläche steuern. Trägt die Anbauvorrichtung jedoch kein Gewicht, kann ein Zustand geringen Druckes und geringer Strömung auftreten, bei dem die Strömung nicht ausreicht, um den für den richtigen Betrieb des Steuerventils erforderlichen Druckabfall zu erzeugen.

Insbesondere hydraulisch gesteuerte Ventile, deren Einsatzbereich von hohen bis niedrigen Druckdifferenzen reicht, können instabile Betriebsbedingungen aufweisen.

Die der Erfindung zugrunde liegende Aufgabe wird darin gesehen, bei einem hydraulisch gesteuerten Ventil der eingangs genannten Art Vibrationen, insbesondere Hochfrequenzvibrationen des Hauptventilteils, zu vermindern bzw. zu unterdrücken.

Diese Aufgabe wird erfindungsgemäß dadurch gelöst, daß zwischen Hauptventilteil und Gehäuse eine Dämpfungskammer ausgebildet ist, welche über eine Dämpfungsöffnung mit der Pilotkammer in Verbindung steht. Das Volumen der Dämpfungskammer verändert sich aufgrund einer Bewegung des Hauptventilteils.

Eine zweckmäßige Ausgestaltung der Erfindung ist darin zu sehen, daß das Gehäuse eine Ventilbohrung mit einem Abschnitt größeren und einem Abschnitt kleineren Durchmessers aufweist, die durch eine ringförmige Stirnfläche miteinander verbunden sind. Das Hauptventilteil enthält ebenfalls einen Abschnitt größeren und einen Abschnitt kleineren Durchmessers. Diese stehen mit den entsprechenden Abschnitten der Ventilbohrung gleitend und dichtend in Eingriff. Die Dämpfungskammer ist im Bereich der Durchmessererweiterung zwischen den ringförmigen Stirnflächen der Ventilbohrung und des Hauptventilteils eingeschlossen.

Entsprechend der Größe der Dämpfungsöffnung kann die Hydraulikflüssigkeit nur relativ langsam in die Dämpfungskammer eindringen bzw. diese verlassen. Infolgedessen läßt sich auch das Hauptventilteil nicht beliebig rasch bewegen, so daß Hochfrequenzvibrationen stark gedämpft werden.

Vorzugsweise umfaßt die Dämpfungsöffnung einen einzigen sich durch einen Teil des Hauptventilteils erstreckenden Kanal. In diesen Kanal ist eine Dämpfungsblende eingefügt, deren Querschnitt und Länge den jeweiligen Anforderungen gemäß ausgebildet ist.

Es ist zweckmäßig, wenn sich der Kanal radial durch den Abschnitt kleineren Durchmessers des Hauptventilteils erstreckt.

Einer weiteren Ausbildung der Erfindung zufolge sind zwischen dem Pilotventilteil und dem Hauptventilteil Federmittel angeordnet, die auf das Hauptventilteil Kräfte übertragen, welche so gerichtet sind, daß das Hauptventilteil bestrebt ist, den Bewegungen des Pilotventilteils zu folgen. Dadurch, daß das Hauptventilteil nicht lediglich den Kräften der Flüssigkeitsdrücke ausgesetzt ist, kann es sich auch dann bewegen, wenn keine Druckdifferenz vorliegt, um das Ventil zu öffnen oder zu schließen.

In vorteilhafter Weise erstreckt sich durch das Hauptventilteil eine Pilotpassage, durch welche der Auslaß mit der Pilotkammer verbindbar ist. Ferner trägt das Pilotventilteil eine Ringschulter, die gleitbar in einem Teil der Pilotpassage angeordnet ist und der Steuerung des Durchflusses durch die Pilotpassage dient.

Eine bevorzugte Ausgestaltung dieser Pilotsteuerung wird darin gesehen, daß das Hauptventilteil eine mit dem Einlaß in Verbindung stehende Einlaßkammer einschließt, daß die Pilotpassage einen ersten Kanal und einen zweiten Kanal, welche getrennt durch das Hauptventilteil zwischen der Pilotkammer und der Einlaßkammer verlaufen, sowie einen dritten Kanal umfaßt, wobei letzterer den ersten Kanal schneidet und mit dem Auslaß verbindet, und daß ferner die Ringschulter derart bewegbar ist, daß sich durch sie die Verbindung zwischen dem dritten Kanal und der Einlaßkammer, die über einen ersten Abschnitt des ersten Kanals verläuft, öffnen oder schließen läßt.

Ferner ist es zweckmäßig, daß das Pilotventilteil wenigstens eine weitere Ringschulter aufweist, die verschiebbar und dichtend von einem zweiten Abschnitt des ersten Kanals aufgenommen wird und eine unmittelbar über den ersten Kanal verlaufende Verbindung zwischen dem dritten Kanal und der Pilotkammer verschließt.

Vorzugsweise verläuft der erste Kanal entlang der zentralen Achse des Hauptventilteils und der zweite Kanal im wesentlichen parallel zum ersten Kanal.

Um das Betriebsverhalten bei geringem Druck bzw. geringer Druckdifferenz über dem Einlaß und Auslaß zu verbessern, sind gemäß einer besonders bevorzugten Ausgestaltung der Erfindung drei Federn vorgesehen.

Eine erste Feder ist zwischen dem Gehäuse und dem Pilotventilteil derart vorgespannt, daß das Pilotventilteil und das Hauptventilteil in eine Haltung gedrängt werden, in der die Verbindung zwischen Einlaß und Auslaß verschlossen ist. Eine zweite Feder ist zwischen dem Pilotventilteil und dem Hauptventilteil so vorgespannt, daß das Hauptventilteil in eine Richtung gedrängt wird, in der die Verbindung zwischen Einlaß und Auslaß verschlossen ist. Und eine dritte Feder ist zwischen Pilotventilteil und Hauptventilteil derart vorgespannt, daß das Hauptventilteil in eine Richtung gedrängt wird, in der der Ventilsitz zwischen Einlaß und Auslaß geöffnet wird. Es ist ein Gegenlager vorgesehen, welches die Ausdehnungsmöglichkeit der zweiten Feder begrenzt.

Die dritte Feder wirkt damit der zweiten Feder entgegen. Sie wird hinsichtlich Federkonstante und Vorspannung schwächer ausgelegt sein als die zweite Feder. Damit überwiegt bei geschlossenem Ventil die Wirkung der zweiten Feder, die diesen Betriebszustand aufrechterhält. Wird ein Öffnungssignal an das Pilotventilteil gegeben, so bewegt sich dieses relativ zum Hauptventilteil und gibt einen Kanal zwischen Pilotkammer und Auslaß des Ventils wenigstens teilweise frei. Der Pilotdruck auf das Hauptventilteil und folglich auch der Schließdruck nimmt damit ab, so daß bei ausreichendem Einlaßdruck das Hauptventilteil den Hauptventilsitz wenigstens teilweise öffnet. Diese Öffnung erfolgt jedoch gegen die Kraft der zweiten Feder, die bestrebt ist, den geschlossenen Zustand aufrechtzuerhalten. Die zweite Feder ist jedoch in ihrer Ausdehnungsmöglichkeit begrenzt, so daß sie bei einer entsprechend großen Verschiebung des Pilotventilteils, die infolge eines Steuersignales erfolgen kann, wirkungslos wird. Jetzt überwiegt die Wirkung der dritten Feder, welche die Öffnung des Ventils unterstützt und so ausgelegt ist, daß sie Dichtungsgleitwiderstände und eine Federvorspannung des Hauptventilteils überwindet.

Vorzugsweise ist eine Federführung vorgesehen, die mit der zweiten Feder gekoppelt ist und die mit dem Pilotventilteil in Eingriff steht, um Kräfte zwischen dem Pilotventilteil und dem Hauptventilteil zu übertragen. Die Verbindung zwischen der zweiten Feder und dem Pilotventilteil löst sich, wenn die zweite Feder ihre maximal zulässige Ausdehnung erreicht hat.

Hierfür ist es zweckmäßig, daß das Gegenlager so angeordnet ist, daß es die Bewegungsmöglichkeit der Federführung begrenzt, so daß sich das Pilotventilteil von der Federführung löst, wenn sich das Pilotventilteil über eine vorherbestimmbare Strecke hinausbewegt.

Zweckmäßigerweise ist das Gegenlager durch eine Oberfläche des Hauptventilteils gebildet. Diese Oberfläche ist beispielsweise die Stirnfläche einer Sackbohrung im Hauptventilteil, in der die Federführung angeordnet ist.

Die erfindungsgemäße Lösung ist besonders vorteilhaft auf elektromagnetisch gesteuerte Ventile des Poppet-Types anwendbar.

Anhand der Zeichnung, die ein Ausführungsbeispiel der Erfindung zeigt, sollen die Erfindung sowie weitere Vorteile und vorteilhafte Ausgestaltungen der Erfindung näher beschrieben und erläutert werden.

Die einzige Figur zeigt ein hydraulisches Steuerventil gemäß der vorliegenden Erfindung.

Es ist ein elektromagnetisch betätigbares Steuerventil 10 dargestellt, das eine Spule 12 und einen hohl ausgebildeten Gehäusegrundkörper 14 aufweist. In letzterem sind ein Hauptventilteil 16 und ein Magnetanker 18 angeordnet. Weitere zum Gehäuse gehörende Teile umfassen einen hohlen Aufsatz 20 und eine Abdeckung 22, die auf dem Aufsatz 20 durch eine Mutter 24 gehalten wird. Ein Mindestluftspalt zwischen Anker 18 und Aufsatz 20 wird durch einen nicht magnetischen Anschlagring 21 sichergestellt. Der Gehäusegrundkörper 14 und der Aufsatz 20 werden durch eine hohle zylindrische Buchse 25 auf Abstand gehalten. Mit Bezug auf die Figur ist in den unteren Teil des Gehäusegrundkörpers 14 eine hohle Gehäusehülse 26 eingeschraubt und gegenüber dem Gehäusegrundkörper 14 durch einen O-Ring 28 abgedichtet. Der Gehäusegrundkörper 14, der Anker 18, der Aufsatz 20 und die Abdeckung 22 bestehen aus ferromagnetischem Material, und die übrigen Teile sind aus nicht magnetischem Material, wie beispielsweise rostfreiem Stahl, hergestellt.

Die Gehäusehülse 26 ist mit Bezug auf die Figur nach unten hin offen und bildet dadurch einen Einlaß 30, der mit einer Druckflüssigkeitsquelle, wie einer Pumpe 32, in Verbindung steht. Am Umfang der Gehäusehülse 26 befinden sich zwei Auslässe 34, die an eine hydraulisch betätigbare Vorrichtung, beispielsweise einen nicht dargestellten Hydraulikzylinder, anschließbar sind. Zwischen Einlaß 30 und Auslaß 34 ist in die Gehäusehülse 26 ein ringförmiger Hauptventilsitz 36 eingearbeitet.

Das Ventilteil 16 ist beweglich in der Gehäusehülse 26 angeordnet und wirkt mit dem Hauptventilsitz 36 derart zusammen, daß eine Steuerung des Flüssigkeitsstromes vom Einlaß 30 zum Auslaß 34 ermöglicht wird. Das Ventilteil 16 weist auf seinen gegenüberliegenden Enden je eine axial ausgerichtete Sackbohrung 38, 40 auf. Zwischen diesen Sackbohrungen 38 und 40 verläuft ein mittlerer axialer Kanal 42 und ein hierzu getrennter parallel zur Achse verlaufender Kanal 44. Ein radialer Kanal 43 verbindet den Kanal 42 mit der äußeren Oberfläche des Ventilteils 16 und dem Auslaß 34.

In die Sackbohrung 38 ist ein Stopfen 46 eingeschraubt, welcher eine axiale Sackbohrung 48 enthält, welche sich zu der vom Einlaß 30 abgewandten Seite öffnet. Der Stopfen 46 und das Ventilteil 16 schließen eine Einlaßkammer 50 ein. Nahe dem Einlaßende des Stopfens 46 trägt dieser einen ringförmigen Steg 52. Nahe dieses Steges 52 erstreckt sich radial in dem Stopfen 46 eine Dosierblende 54, welche die Einlaßkammer 50 mit der Sackbohrung 38 verbindet. Zwischen dem ringförmigen Steg 52 und der Wandung der Bohrung 38 befindet sich ein vorherbestimmbarer ringförmiger Abstand, so daß die Sackbohrung 38 mit dem Einlaß 30 in Verbindung steht. Die radiale Breite des Abstandes ist vorzugsweise kleiner als der Durchmesser der Dosierblende 54, so daß Fremdkörper, die die Dosierblende 54 verstopfen könnten, an dem ringförmigen Spalt abgefangen werden. Da die Gesamtdurchtrittsfläche für die Flüssigkeit am ringförmigen Spalt wesentlich größer ist als die Öffnung der Dosierblende 54, können sich an dem Spalt viele Fremdkörper ab setzen, ohne daß die Durchflußverbindung zwischen Einlaß 30 und Dosierblende 54 wesentlich beeinträchtigt wird.

Das Ventilteil 16, der Gehäusegrundkörper 14 und der Magnetanker 18 begrenzen eine Pilotkammer 58. Durch den mittleren Kanal 42 des Ventilteils 16 erstreckt sich zwischen dem Magnetanker 18 und der Einlaßkammer 50 ein schieberförmig ausgebildetes Pilotventilteil 60. Dieses dient der Einstellung eines Durchlaßquerschnittes zwischen Auslaß 34 und Pilotkammer 58. Das Pilotventilteil 60 trägt eine Vielzahl von ringförmigen Stegen oder Ringschultern. Der aus der Sicht der Figur unterste Steg wirkt mit der Wandung des Kanals 43 zusammen, wodurch eine Verbindung zwischen dem Auslaß 34 und der Einlaßkammer 50 über einen ersten Abschnitt des Kanals 42 geöffnet und geschlossen werden kann. Die weiteren Stege des Pilotventilteils 60 wirken mit einem aus der Sicht der Figur oberhalb des Kanals 43 liegenden zweiten Abschnitt des Kanals 42 zusammen und verhindern jede Verbindung zwischen dem radialen Kanal 43 sowie dem Auslaß 34 und der Pilotkammer 58.

Die Gehäusehülse 26 enthält einen Abschnitt 59 mit kleinerem Durchmesser und einen Abschnitt 61 mit großem Durchmesser, welche durch eine ringförmige Schulter 63 miteinander in Verbindung stehen. Der Hauptabschnitt des Ventilteils 16 steht gleitend mit der Wandung des Abschnittes 59 mit kleinerem Durchmesser in Verbindung. Das Ventilteil 16 trägt an einem Ende einen Flansch 62, der gleitend und dichtend mit dem Abschnitt 61 der Gehäusehülse 26, die den erweiterten Bohrungsdurchmesser aufweist, in Eingriff steht. Die Gehäusehülse 26 und das Ventilteil 16 schließen gemeinsam eine Dämpfungskammer 64 ein, die im Bereich der Schulter 63 liegt. Radial durch das Ventilteil 16 erstreckt sich eine Dämpfungsöffnung 66, die die Dämpfungskammer 64 mit der Pilotkammer 58 verbindet, wodurch die Bewegung des Ventilteils 16 in der Gehäusehülse 26 hydraulisch gedämpft wird, da durch eine Bewegung des Ventilteils 16 sich das Volumen der Dämpfungskammer 64 ändert, so daß ein Ausgleichsflüssigkeitsstrom durch die mit einer Blende versehenen Dämpfungsöffnungen 66 erfolgt.

In der Einlaßkammer 50 befindet sich eine Federführung 68, welche mit einem Ende mit dem Pilotventilteil 60 in Verbindung steht. Die Federführung 68 kann sich unter bestimmten Umständen auf der Stirnfläche 69 der Sackbohrung 38 abstützen, wobei die Verbindung zum Pilotventilteil unterbrochen wird. Zwischen einer Schulter der Federführung 68 und einer Stirnfläche innerhalb der Sackbohrung 48 des Stopfens 46 steht eine Feder 70 in Eingriff.

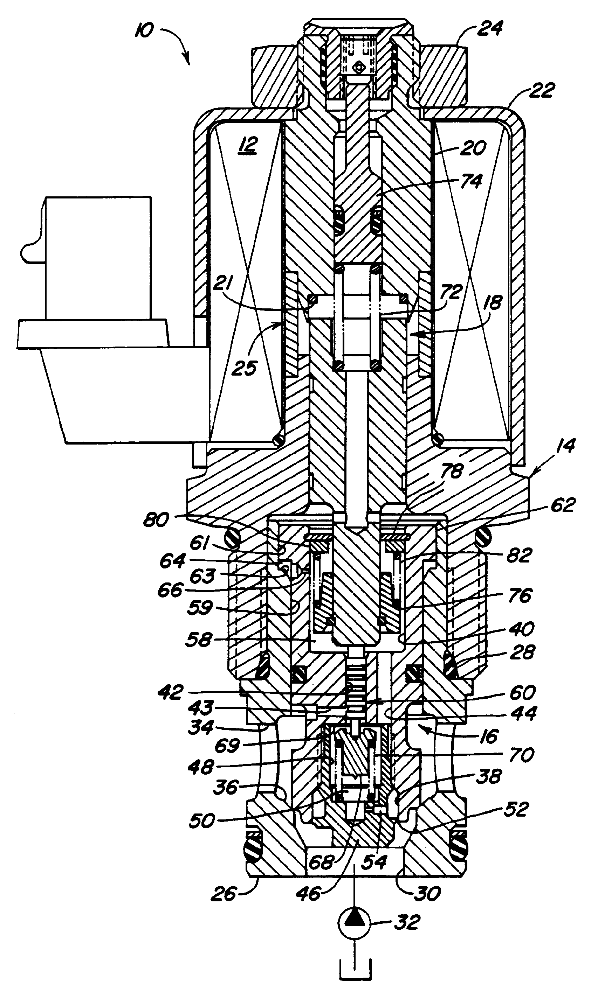

Eine weitere Feder 72 steht zwischen dem Anker 18 und einem Federeinstellkolben 74 in Eingriff. Die Federn 72 und 70 sind vorgespannt und drücken das Ventilteil 16 gegen den Hauptventilsitz 36. Die Kraft der Feder 72 teilt sich über den Magnetanker 18, das Pilotventilteil 60, die Federführung 68, die Feder 70 und den Stopfen 46 dem Ventilteil 16 mit. Innerhalb der Pilotkammer 58 befindet sich eine hohle Federführung 76, durch deren Bohrung sich ein Teil des Magnetankers 18 erstreckt. Diese Federführung 76 ist mit dem Magnetanker 18 verbunden, um auf diesen eine Kraft zu übertragen. Im äußeren Endbereich der Sackbohrung 40 des Ventilteils 16 befindet sich eine Ringnut, in die ein Sprengring 78 eingefügt ist. Eine Feder 82 steht zwischen der Federführung 76 und einem ringförmigen Federanschlag 80 in Eingriff und stellt eine federnde Verbindung zwischen dem Ventilteil 16 und dem mit dem Anker 18 verbundenen Pilotventilteil 60 her, so daß dann, wenn die Spule 12 erregt ist und den Magnetanker 18 gemäß Fig. 1 nach oben bewegt, durch die Feder 82 eine Kraft auf das Ventilteil 16 übertragen wird, die die Tendenz hat, das Ventilteil 16 von dem Hauptventilsitz 36 abzuheben. In ähnlicher Weise übermittelt die Feder 70 dann, wenn der Magnetanker 18 sich gemäß Fig. 1 nach unten bewegt, eine Kraft auf den Stopfen 46 und das Ventilteil 16, welche die Tendenz aufweist, das Ventilteil 16 zusammen mit dem Magnetanker 18 und dem Pilotventilteil 60 nach unten zu bewegen.

Vorzugsweise ist die Feder 70 steifer ausgebildet als die Feder 82. Ferner weist die Feder 70 in der dargestellten Stellung des Ventils, bei der die Spule nicht erregt und das Ventil geschlossen ist, eine höhere Vorspannung auf als die Feder 82. Hierdurch läßt sich bei beginnender Erregung der Spule 12 das Pilotventilteil 60 leicht relativ zum Hauptventilteil 60 verschieben, wodurch der radiale Kanal 43 geöffnet wird und die hydraulische Drucksteuerung des Hauptventilteils 16 beginnt. Die Steifigkeit und Vorspannung der Feder 72 wird so eingestellt, daß einerseits ein erwünschter Zusammenhang zwischen Erregungsstrom und Verschiebung erreicht wird und andererseits das Ventil sicher schließt, wenn die Spule 12 nicht erregt ist. Beispielsweise hat die Feder 70 eine Federkonstante von 4 N/mm und eine Vorspannungskraft von 20 N. Die Feder 72 kann eine Federkonstante von 15,24 N/mm und eine Vorspannungskraft von 7,23 N einnehmen. Die Feder 82 kann eine Federkonstante von 1,04 N/mm und eine Vorspannungskraft von 12,77 N einnehmen. Es versteht sich, daß jeder dieser Werte verändert werden kann, um andere Betriebsverhältnisse des Ventils zu erreichen.

Ist die Spule 12 nicht erregt, so ist jede Verbindung zwischen Auslaß 34 und Pilotkammer 58 unterbrochen, während die Pilotkammer über den Ringkanal 52 und die Blende 54 mit dem Einlaß 30 in Verbindung steht, so daß auf beiden Seiten des Hauptventilteils 16 der gleiche Druck ansteht. Das Hauptventilteil wird mit dem Anker 18 infolge der Kraft der Feder 72 gegen den Hauptventilsitz 36 gedrückt, so daß das Ventil verschlossen ist.

Wenn die Spule 12 erregt wird, bewegen sich der Magnetanker 18, das Pilotventilteil 60 und die Federführung 68 gemäß der Darstellung nach oben, wobei sich die Feder 70 ausdehnt und die Feder 82 zusammenzieht. Dabei bewegt sich der unterste Ringsteg des Pilotschiebers 60 an der unteren Kante des radialen Kanales 43 vorbei, so daß der Auslaß 34 mit der Pilotkammer 58 über die Einlaßkammer 50 und den Kanal 44 verbunden wird. Der Druck in der Pilotkammer 58 nimmt ab, und der Pilotdruckbetrieb des Hauptventilteils 16 wird eingeleitet. Bei einem Zustand, bei dem kein Druck oder lediglich ein geringer Druck vorliegt, setzt hingegen das Pilotventilteil 60 seine Bewegung nach oben entsprechend dem wachsenden Spulenstrom fort, bis die Federführung 68 an der Stirnfläche der Bohrung 38 anliegt und so eine weitere Ausdehung der Feder 70 verhindert. Bei weiterem Ansteigen des Spulenstromes trennt sich das Pilotventilteil 60 von der Federführung 68, so daß eine weitere Aufwärtsbewegung nicht mehr von der Vorspannung der Feder 70 unterstützt wird. Durch diese weitere Aufwärtsbewegung des Pilotventilteils 60 wird die Feder 82 weiter zusammengedrückt. Da ihre Vorspannung ausreicht, um die Dichtungsreibung, welche sich einer Bewegung des Hauptventilteils 16 entgegenstellt, zu überwinden, öffnet nun das Hauptventilteil 16 das Ventil.

## Patentansprüche

1. Hydraulisch gesteuertes Ventil (10) mit einem Hauptventilteil (16), welches in einem Gehäuse (14,26) verschiebbar angeordnet ist und mit diesem eine Pilotkammer (58) einschließt, wobei der Druck in der Pilotkammer (58) direkt auf das Hauptventilteil (16) einwirkt, um die Flüssigkeitsverbindung zwischen Einlaß (30) und Auslaß (34) des Ventils (10) zu steuern, und mit Pilotventilmitteln zur Steuerung des Pilotdruckes, welche wenigstens ein in bezug zum Hauptventilteil (16) bewegbares Pilotventilteil (60) enthalten, dadurch gekennzeichnet, daß zwischen Hauptventilteil (16) und Gehäuse (14,26) eine Dämpfungskammer (64) ausgebildet ist, welche über eine Dämpfungsöffnung (66) mit der Pilotkammer (58) in Verbindung steht.

2. Ventil nach Anspruch 1, dadurch gekennzeichnet, daß das Gehäuse (14) eine Ventilbohrung mit einem Abschnitt (61) größeren und einem Abschnitt (59) kleineren Durchmessers enthält, welche durch eine ringförmige Schulter (63) miteinander verbunden sind, daß das Hauptventilteil (16) ebenfalls einen Abschnitt größeren und einen Abschnitt kleineren Durchmessers aufweist, die mit den entsprechenden Abschnitten (59, 61) der Ventilbohrung gleitend und dichtend in Eingriff stehen, und daß die Dämpfungskammer (64) im Bereich der Durchmessererweiterung zwischen den ringförmigen Stirnflächen der Ventilbohrung und des Hauptventilteils (16) eingeschlossen ist.

3. Ventil nach Anspruch 1 oder 2, dadurch gekennzeichnet, daß die Dämpfungsöffnung einen einzigen sich durch einen Teil des Hauptventilteils (16) erstreckenden Kanal (66) umfaßt.

4. Ventil nach Anspruch 3, dadurch gekennzeichnet, daß der Kanal (66) sich radial durch den Abschnitt kleineren Durchmessers des Hauptventilteils (16) erstreckt.

5. Ventil nach einem der Ansprüche 1 bis 4, dadurch gekennzeichnet, daß zwischen dem Pilotventilteil (60) und dem Hauptventilteil (16) Federmittel (70, 82) angeordnet sind, die auf das Hauptventilteil (16) Kräfte übertragen, die so gerichtet sind, daß das Hauptventilteil (16) bestrebt ist, den Bewegungen des Pilotventilteils (60) zu folgen.

6. Ventil nach einem der Ansprüche 1 bis 5, dadurch gekennzeichnet, daß sich durch das Hauptventilteil (16) eine Pilotpassage erstreckt, durch welche der Auslaß (34) mit der Pilotkammer (58) verbindbar ist, und daß das Pilotventilteil (60) eine Ringschulter trägt, die gleitbar in einem Teil der Pilotpassage angeordnet ist und der Steuerung des Durchflusses durch die Pilotpassage dient.

7. Ventil nach Anspruch 6, dadurch gekennzeichnet, daß das Hauptventilteil (16) eine mit dem Einlaß (30) in Verbindung stehende Einlaßkammer (50) einschließt, daß die Pilotpassage einen ersten Kanal (42) und einen zweiten Kanal (44), welche getrennt durch das Hauptventilteil (16) zwischen der Pilotkammer (58) und der Einlaßkammer (50) verlaufen, sowie einen dritten Kanal (43) umfaßt, welcher den ersten Kanal (42) schneidet und mit dem Auslaß (34) verbindet, und daß die Ringschulter derart bewegbar ist, daß sich durch sie die Verbindung zwischen dem dritten Kanal (43) und der Einlaßkammer (50), die über einen ersten Abschnitt des ersten Kanals (42) verläuft, öffnen oder schließen läßt.

8. Ventil nach Anspruch 7, dadurch gekennzeichnet, daß das Pilotventilteil (60) wenigstens eine weitere Ringschulter aufweist, die verschiebbar und dichtend von einem zweiten Abschnitt des ersten Kanals (42) aufgenommen wird und eine über den ersten Kanal (42) verlaufende Verbindung zwischen dem dritten Kanal (43) und der Pilotkammer (58) verschließt.

9. Ventil nach Anspruch 7 oder 8, dadurch gekennzeichnet, daß der erste Kanal (42) entlang der zentralen Achse des Hauptventilteils (16) verläuft.

10. Ventil nach einem der Ansprüche 7 bis 9, dadurch gekennzeichnet, daß der zweite Kanal (44) im wesentlichen parallel zum ersten Kanal (42) verläuft.

## Claims

1. A hydraulically controlled valve (10) with a main valve part (16) which is slidably arranged in a housing (14, 26) and encloses a pilot chamber (58) therewith, wherein the pressure in the pilot chamber (58) acts directly on the main valve part (16), in order to control the fluid connection between inlet (30) and outlet (34) of the valve (10), and with pilot valve means for controlling the pilot pressure, including at least one pilot valve part (60) movable relative to the main valve part (16), characterized in that a damping chamber (64) is formed between the main valve part (16) and the housing (14, 26) and is in communication with the pilot chamber (58) through a damping orifice (66).

2. A valve according to claim 1, characterized in that the housing (14) includes a valve bore with a section (61) of larger and a section (59) of smaller diameter, which are connected together by an annular shoulder (63), in that the main valve part (16) likewise has a section of larger and a section of smaller diameter which slide and seal in the corresponding sections (59, 61) of the valve bore, and in that the damping chamber (64) is enclosed in the region of the enlargement of diameter between the annular end faces of the valve bore and the main valve part (16).

3. A valve according to claim 1 or 2, characterized in that the damping orifice comprises a single channel (66) extending through a part of the main valve part (16).

4. A valve according to claim 3, characterized in that the channel (66) extends radially through the section of smaller diameter of the main valve part (16).

5. A valve according to any of claims 1 to 4, characterized in that spring means (70, 82) are arranged between the pilot valve part (60) and the main valve part (16) and transmit forces to the main valve part (16) which are so directed that the main valve part (16) is biased to follow the movements of the pilot valve part (60).

6. A valve according to any of claims 1 to 5, characterized in that a pilot passage extends through the main valve part (16), through which the outlet (34) can be connected to the pilot chamber (58), and in that the pilot valve part (60) has an annular shoulder which is arranged slidably in a part of the pilot passage and serves to control the flow through the pilot passage.

7. A valve according to claim 6, characterized in that the main valve part (16) encloses an inlet chamber (50) in communication with the inlet (30), in that the pilot passage comprises a first channel (42) and a second channel (44) which run separately through the main valve part (16) between the pilot chamber (58) and the inlet chamber (50), and also a third channel (43) which intersects the first channel (42) and communicates with the outlet (34), and in that the annular shoulder is so movable that the connection between the third channel (43) and the inlet chamber (50), extending over a first section of the first channel (42), can be opened or closed thereby.

8. A valve according to claim 7, characterized in that the pilot valve part (60) comprises at least one further annular shoulder, which is received in sliding and sealed manner by a second section of the first channel (42) and closes a connection running though the first channel (42) between the third channel (43) and the pilot chamber (58).

9. A valve according to claim 7 or 8, characterized in that the first channel (42) runs along the central axis of the main valve part (16).

10. A valve according to any of claims 7 to 9, characterized in that the second channel (44) runs substantially parallel to the first channel (42).

## Revendications

1. Distributeur (10) à commande hydraulique, avec un obturateur principal (16), qui est disposé à coulissement dans un boîtier (14, 26) et délimite avec ce dernier une chambre de pilotage (58), la pression dans la chambre de pilotage (58) agissant directement sur l'obturateur principal (16) pour commander le passage de liquide entre l'entrée (30) et la sortie (34) du distributeur (10), et avec des moyens de pilotage pour commander la pression de pilotage, qui comprennent au moins un obturateur de pilotage (60) mobile par rapport à l'obturateur principal (16), **caractérisé** en ce qu'une chambre d'amortissement (64), qui communique avec la chambre de pilotage (58) par un orifice d'amortissement (66), est formée entre l'obturateur principal (16) et le boîtier (14, 26).

2. Distributeur selon la revendication 1, **caractérisé** en ce que le boîtier (14) contient un alésage de distributeur avec une partie (61) de diamètre supérieur et une partie (59) de diamètre inférieur, qui sont mutuellement reliées par un épaulement annulaire (63), en ce que l'obturateur principal (16) présente également une partie de diamètre supérieur et une partie de diamètre inférieur, qui sont en prise en coulissement et en étanchéité avec les parties correspondantes (59, 61) de l'alésage de distributeur, et en ce que la chambre d'amortissement (64) est délimitée dans la région de l'élargissement de diamètre entre les faces frontales annulaires de l'alésage de distributeur et de l'obturateur principal (16).

3. Distributeur selon la revendication 1 ou 2, **caractérisé** en ce que l'orifice d'amortissement comprend un unique canal (66) s'étendant à travers une partie de l'obturateur principal (16).

4. Distributeur selon la revendication 3, **caractérisé** en ce que le canal (66) s'étend radialement à travers la partie de diamètre inférieur de l'obturateur principal (16).

5. Distributeur selon l'une quelconque des revendications 1 à 4, **caractérisé** en ce que des ressorts (70, 82) sont disposés entre l'obturateur de pilotage (60) et l'obturateur principal (16), et ils transmettent sur l'obturateur principal (16) des forces qui sont dirigées de telle sorte que l'obturateur principal (16) est forcé à suivre les mouvements de l'obturateur de pilotage (60).

6. Distributeur selon l'une quelconque des revendications 1 à 5, **caractérisé** en ce qu'un passage de pilotage s'étend à travers l'obturateur principal (16) et permet de faire communiquer la sortie (34) avec la chambre de pilotage (58), et en ce que l'obturateur de pilotage (60) porte un épaulement annulaire, qui est disposé à coulissement dans une partie du passage de pilotage et sert à commander l'écoulement à travers le passage de pilotage.

7. Distributeur selon la revendication 6, **caractérisé** en ce que l'obturateur principal (16) délimite une chambre d'admission (50) qui communique avec l'entrée (30), en ce que le passage de pilotage comprend un premier canal (42) et un deuxième canal (44), qui s'étendent séparément à travers l'obturateur principal (16) entre la chambre de pilotage (58) et la chambre d'admission (50), ainsi qu'un troisième canal (43), qui coupe le premier canal (42) et communique avec la sortie (34), et en ce que l'épaulement annulaire peut être déplacé de telle sorte qu'il permet d'ouvrir ou de fermer la communication entre le troisième canal (43) et la chambre d'admission (50), qui s'étend sur une première partie du premier canal (42).

8. Distributeur selon la revendication 7, **caractérisé** en ce que l'obturateur de pilotage (60) présente au moins un autre épaulement annulaire, qui est reçu à coulissement et en étanchéité par une seconde partie du premier canal (42) et ferme une communication, passant par le premier canal (42), entre le troisième canal (43) et la chambre de pilotage (58).

9. Distributeur selon la revendication 7 ou 8, **caractérisé** en ce que le premier canal (42) s'étend le long de l'axe central de l'obturateur principal (16).

10. Distributeur selon l'une quelconque des revendications 7 à 9, **caractérisé** en ce que le deuxième canal (44) s'étend sensiblement parallèlement au premier canal (42).
